# EUROPEAN PATENT APPLICATION

(11) **EP 0 703 063 A2**
(43) Date of publication of application: **27.03.1996**
(21) Application number: 95202531.0
(22) Date of filing: 19.09.1995
(51) Int. Cl.: B29C 65/02, B31F 5/08

(54) **Apparatus for affixing seal tape**

(30) Priority: 21.09.1994 JP 226806/94
(71) Applicant: Shikoku Kakoki Co., Ltd., Itano-gun Tokushima (JP)
(72) Inventor: Yamamoto, Hidekimi, c/o Shikoku Kakoki Co., Ltd., Itano-gun, Tokushima (JP); Sato, Seiji, c/o Shikoku Kakoki Co., Ltd., Itano-gun, Tokushima (JP); Ueda, Michio, c/o Shikoku Kakoki Co., Ltd., Itano-gun, Tokushima (JP)
(74) Representative: Vollebregt, Cornelis Jacobus, Ir.

(57) **Abstract**

An apparatus for affixing a seal tape comprises transport means for transporting a web W covered with a thermoplastic synthetic resin via a heating station S1 and then via an application station S2, a heater for heating an edge portion of the web W at the heating station S1, a feeder for feeding the seal tape C to the application station S2 so that a widthwise half of the seal tape C is lapped over the edge portion of the web W with the other half of the seal tape projecting beyond the web edge portion, and a pair of pressure rollers 36, 38 rotatably supported at the application station S2 so as to be rotatable in opposite directions to each other by the transport of the web W for affixing the seal tape C to the web edge portion under pressure by nipping the web and the tape. A pair of gears 41, 42 in mesh with each other are attached to the respective pressure rollers 36, 38.

## Description

### BACKGROUND OF THE INVENTION

The present invention relates to an apparatus for use in preparing a tubular liquid packaging material having a longitudinal sealed portion from a web which is coated with a thermoplastic synthetic resin, by overlapping opposite edge portions of the web and sealing the overlapped portions, the apparatus being adapted to affix a seal tape for preventing penetration of liquids to one of the web edge portions to form the sealed portion.

Apparatus of the type described are already known which comprise transport means for transporting a web covered with a thermoplastic synthetic resin over opposite surfaces thereof via a heating station and then via an application station, heating means for heating an edge portion of the web at the heating station to melt the synthetic resin on one of the surfaces without melting the resin on the other surface, feed means for feeding a seal tape to the application station so that a widthwise half of the seal tape is lapped over the above-mentioned one surface of the edge portion of the web with the other half of the seal tape projecting beyond the web edge portion, and a pair of pressure rollers rotatably supported at the application station so as to be rotatable in opposite directions to each other by the transport of the web for affixing the seal tape to the web edge portion under pressure by nipping the web edge portion and the seal tape therebetween.

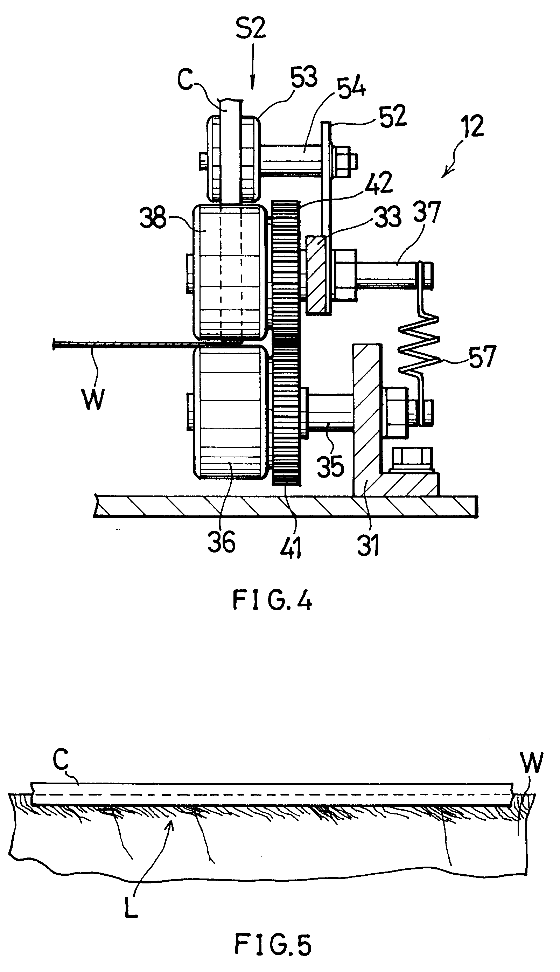

FIG. 5 shows a seal tape C as affixed to a web W by the above apparatus. A multiplicity of lateral wrinkles L arranged along one edge of the tape C longitudinally thereof are formed in the web W. Pinholes are liable to be made in the wrinkled portion to result in an impaired sealing property.

The wrinkles L are attributable to the following cause. The thermoplastic synthetic resin is melted only on one surface of the web W. The pressure roller in contact with this surface is caused to slip relative to the web by the melted resin, whereas the other pressure roller in contact with the other web surface is unlikely to slip relative to the web. When slipping, the pressure roller rubs the resin covering to create the wrinkles L.

The creation of wrinkles L may be precluded by suitably setting the resin melting temperature, but the range of suitable temperatures is limited considerably.

Furthermore, the seal tape has a joint produced by joining the tail end of a preceding roll thereof to the leading end of the following roll. The passage of the joint between the pressure rollers is likely to develop the trouble that the joint fails to smoothly move past the rollers, permitting the seal tape to stretch and break.

### SUMMARY OF THE INVENTION

An object of the present invention is to provide a seal tape affixing apparatus which is free of the foregoing problems.

The present invention provides an apparatus for affixing a seal tape which apparatus comprises transport means for transporting a web covered with a thermoplastic synthetic resin over opposite surfaces thereof via a heating station and then via an application station, heating means for heating an edge portion of the web at the heating station to melt the synthetic resin on one of the surfaces without melting the synthetic resin on the other surface, feed means for feeding the seal tape to the application station so that a widthwise half of the seal tape is lapped over said one surface of the edge portion of the web with the other half of the seal tape projecting beyond the web edge portion, and a pair of pressure rollers rotatably supported at the application station so as to be rotatable in opposite directions to each other by the transport of the web for affixing the seal tape to the web edge portion under pressure by nipping the web edge portion and the seal tape therebetween, the apparatus being characterized in that a pair of gears are attached to the respective pressure rollers coaxially therewith and mesh with each other.

With the seal tape affixing apparatus embodying the invention, a pair of gears are attached to the two pressure rollers respectively coaxially therewith and are in mesh with each other, so that the two pressure rollers are rotated at the same speed. Accordingly, although the pressure roller in contact with the melted thermoplastic synthetic resin tends to slip, this roller is forcibly rotated by the other pressure roller and prevented from slipping.

The present invention therefore precludes the web from wrinkling owing to the slipping of the pressure roller, consequently obviating creation of pinholes in the web due to wrinkles to ensure a proper sealing property. The invention further extends the range of temperatures to be set for heating the thermoplastic synthetic resin to relax restrictions on the operating conditions and eliminate the likelihood of the tape breaking.

### BRIEF DESCRIPTION OF THE DRAWINGS

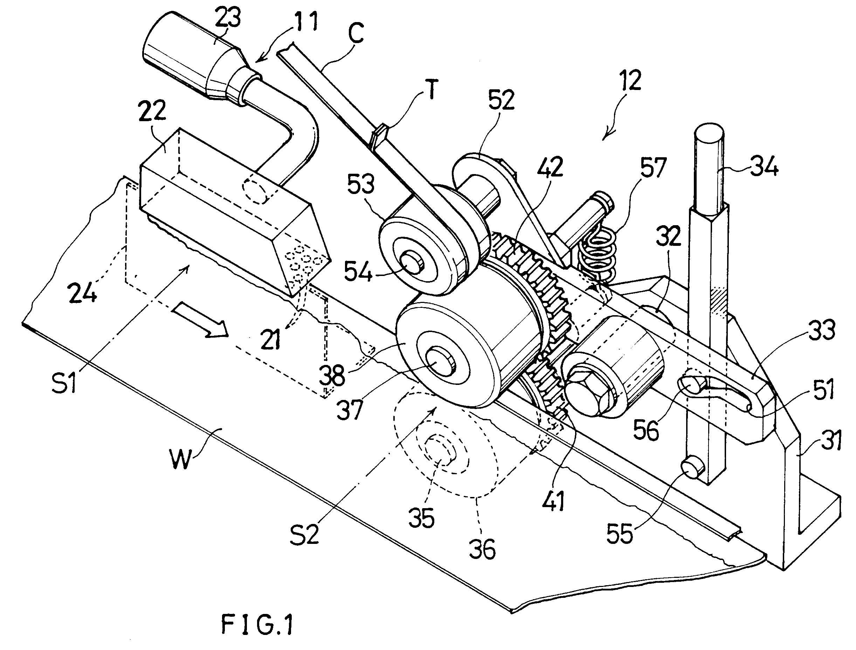

FIG. 1 is a perspective view of a seal tape affixing apparatus embodying the invention;
FIG. 2 is a side elevation of the apparatus;
FIG. 3 is a plan view of the apparatus;
FIG. 4 is a view in section taken along the line IV-IV in FIG. 2; and
FIG. 5 is a diagram for illustrating wrinkles created by a conventional apparatus.

### DESCRIPTION OF THE PREFERRED EMBODIMENT

An embodiment of the invention will be described below with reference to the drawings.

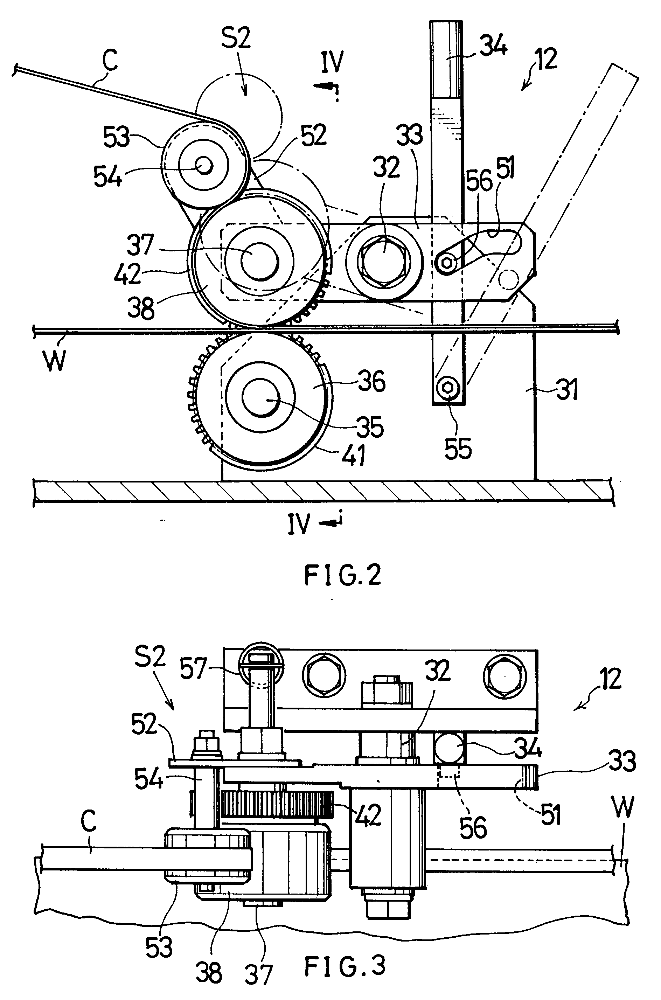

In the following description, the term "front" refers to the side toward which the web is transported (the right-hand side of FIG. 2), the term "rear" to the opposite side, and the terms "right" and "left" refer respectively to the right and left sides of the apparatus (the right and left of FIG. 4) as it is seen from the front rearward.

A web W comprises a paper-base laminate having a polyethylene layer on each of its opposite sides. A seal tape C comprises a polyethylene film having a width of 8 mm and a thickness of 0.05 mm. The seal tape C has a joint T formed by joining tape ends as opposed to each other face-to-face.

A heating station S1 is provided with a heater 11, and an application station S2 with an application device 12.

The heater 11 comprises a plenum chamber 22 so disposed as to be opposed to the right edge of a path of transport of the web from above and having a bottom wall formed with air outlets 21, and an electric heater fan 23 for supplying a hot air stream to the plenum chamber 22. Disposed immediately below the plenum chamber 22 is a vertical windshield plate 24 having its upper end positioned approximately at the same level as the web transport path.

The application device 12 comprises a mound-shaped vertical support plate 31 facing leftward and disposed upright at the right side of the web transport path, a horizontal pivot 32 projecting rightward from a top portion of the support plate 31, a striplike movable plate 33 extending along the transport path, supported at a lengthwise intermediate portion thereof by the pivot 32 upwardly or downwardly movably and spaced apart from the support plate 31, a rodlike manual control lever 34 extending vertically and interposed between the support plate 31 and the movable plate 33, a lower pressure roller 36 having a horizontal lower roller shaft 35 projecting leftward from a lower portion of the support plate 31, an upper pressure roller 38 having a horizontal upper roller shaft 37 projecting leftward from a rear end portion of the movable plate 33 so as to be positioned above the lower roller shaft 35, a lower gear 41 fixed to the right end face of the lower pressure roller 36 and coaxial with the roller 36, and an upper gear 42 fixed to the right end face of the upper pressure roller 38 and coaxial with the roller 38.

A slot 51 extending longitudinally of the movable plate 33 is formed in a front end portion of the plate 33. An upwardly projecting bracket 52 is provided at the rear end portion of the movable plate 33. Projecting leftward from the bracket 52 is a roller shaft 54 for a guide roller 53 for preventing the seal tape from hanging down. The manual control lever 34 is supported at its lower end by a horizontal pivot pin 55 on the support plate so as to be movable forward or rearward. Projecting leftward from a lengthwise intermediate portion of the lever 34 is an engaging pin 56 fitting in the slot 51. The lower roller shaft 35 extends through the support plate 31 and is projected rightward therefrom. The upper roller shaft 37 extends through the movable plate 33 and is projected rightward therefrom. A tension spring 57 extends between and is engaged with the projecting ends of the two roller shafts 35, 37.

As indicated in solid lines in FIG. 2, the rear half of the slot 51 is inclined forwardly upward and the front half of the slot 51 is horizontal when the movable plate 33 is in a horizontal position. At this time, the engaging pin 56 is positioned at the rear end of the slot 51. In this state, the lower pressure roller 36 and the upper pressure roller 38 nip the right edge portion of the web W and the seal tape C under a pressure corresponding to the force of the spring 57, and the lower gear 41 and the upper gear 42 are in mesh with each other.

When the lever 34 is inclined forward as indicated in a phantom line in FIG. 2, the movable plate 33 is inclined forwardly downward, moving the pressure rollers 36, 38 away from each other and the two gears 41, 42 out of meshing engagement with each other.

Unillustrated transport means transports the web W horizontally forward at a constant speed first via the heating station S1 and then via the application station S2. The seal tape C is guided to the application station S2 by unillustrated feed means and passed over the guide roller 53 and then around the upper pressure roller 38, and thereafter has its widthwise half lapped over the right edge portion of the web W with the other half thereof projecting rightward beyond the web right edge portion.

When the web W moves past the heat 11, a hot air stream is forced against the right edge portion of the web W from above to melt the polyethylene layer on the upper side of the web W. The polyethylene layer is melted to such an extent that the layer exhibits adhesion. In this case, it is desired that the polyethylene layer on the lower side of the web W remain unmelted to the greatest possible extent. The windshield plate 24 is used for this purpose to avoid the application of the hot air stream to the lower polyethylene layer, whereas the lower layer inevitably becomes melted to such an extent that the layer softens slightly.

When the web portion with the melted polyethylene layer is brought to the application station S2, the seal tape C is lapped over the right edge portion of the web W, and the web W and the seal tape C pass between the lower and upper pressure rollers 36, 38, whereby the seal tape C is pressed against the web W and consequently affixed thereto under pressure.

When the web W and the seal tape C pass through the nip of the lower and upper pressure rollers 36, 38, these pressure rollers 36, 38 are rotated in opposite directions to each other. Although the upper pressure roller 38 is in contact with the molten polyethylene layer on the upper side of the web and tends to slip, the torque of the lower pressure is transmitted to the upper pressure roller 38 by the pair of gears 41, 42. This obviates the likelihood of the upper roller 38 slipping, causing the two pressure rollers 36, 38 to rotate at the same speed.

## Claims

1. An apparatus for affixing a seal tape comprising:
transport means for transporting a web covered with a thermoplastic synthetic resin over opposite surfaces thereof via a heating station and then via an application station,
heating means for heating an edge portion of the web at the heating station to melt the synthetic resin on one of the surfaces without melting the synthetic resin on the other surface,
feed means for feeding the seal tape to the application station so that a widthwise half of the seal tape is lapped over said one surface of the edge portion of the web with the other half of the seal tape projecting beyond the web edge portion, and
a pair of pressure rollers rotatably supported at the application station so as to be rotatable in opposite directions to each other by the transport of the web for affixing the seal tape to the web edge portion under pressure by nipping the web edge portion and the seal tape therebetween,
the apparatus being characterized in that a pair of gears are attached to the respective pressure rollers coaxially therewith and mesh with each other.

2. An apparatus as defined in claim 1 wherein the heating means comprises a plenum chamber having air outlets so arranged as to be opposed to said one surface of the edge portion of the web, and an electric heater fan for supplying a hot air stream to the plenum chamber.

3. An apparatus as defined in claim 2 wherein a windshield plate is disposed on one side of the edge portion of the web opposite to the plenum chamber side thereof and extends from a position close to the edge portion away from the edge portion.

4. An apparatus as defined in claim 1 wherein the path of transport of the seal tape is provided upstream from the pressure rollers with a guide roller for preventing the seal tape from hanging down.

5. An apparatus as defined in claim 1 or 4 wherein the pressure rollers are movable toward or away from each other with the web edge portion positioned therebetween and are biased toward each other by a spring, and the gears are disengageable from each other when the pressure rollers are moved away from each other.

6. An apparatus as defined in claim 5 wherein one of the pressure rollers is attached to a fixed plate, and the other pressure roller is attached to a movable plate, the movable plate being pivotably attached to the fixed plate by a pivot extending in parallel to shafts for the rollers.
